(19) **Europäisches Patentamt European Patent Office Office européen des brevets**

(11) **EP 4 635 608 A1**

(12) **EUROPEAN PATENT APPLICATION**
published in accordance with Art. 153(4) EPC

(43) Date of publication:
**22.10.2025 Bulletin 2025/43**

(21) Application number: **23903764.1**

(22) Date of filing: **08.11.2023**

(51) International Patent Classification (IPC):
**B01D 61/44** (2006.01) **C25B 1/16** (2006.01)

(52) Cooperative Patent Classification (CPC):
**B01D 61/44; C25B 1/16**

(86) International application number:
**PCT/KR2023/017902**

(87) International publication number:
**WO 2024/128561 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.12.2022 KR 20220174510**

(71) Applicants:
• **POSCO Holdings Inc.**
  **Pohang-si, Gyeongsangbuk-do 37859 (KR)**
• **RESEARCH INSTITUTE OF INDUSTRIAL SCIENCE & TECHNOLOGY**
  **Pohang-si, Gyeongsangbuk-do 37673 (KR)**

(72) Inventors:
• **KIM, Hye Jeong**
  **Pohang-si, Gyeongsangbuk-do 37673 (KR)**

• **KIM, Kyunghoon**
  **Yeosu-si, Jeollanam-do 59691 (KR)**
• **LEE, Jeungu**
  **Gwangyang-si, Jeollanam-do 57792 (KR)**
• **LEE, Hyun Woo**
  **Pohang-si, Gyeongsangbuk-do 37669 (KR)**
• **KIM, Dong Soo**
  **Pohang-si, Gyeongsangbuk-do 37671 (KR)**
• **SEO, Bae Mun**
  **Pohang-si, Gyeongsangbuk-do 37638 (KR)**
• **AHN, Jun-Kyu**
  **Pohang-si, Gyeongsangbuk-do 37641 (KR)**
• **WI, Jin Yeop**
  **Pohang-si, Gyeongsangbuk-do 37669 (KR)**

(74) Representative: **Pfenning, Meinig & Partner mbB Patent- und Rechtsanwälte Theresienhöhe 11a 80339 München (DE)**

(54) **ELECTRODIALYSIS DEVICE AND MANUFACTURING METHOD OF LITHIUM HYDROXIDE**

(57) The present invention relates to a bipolar electrodialysis device for manufacturing lithium hydroxide, having a structure in which a positive electrode cell including a positive electrode, a first bipolar membrane, an anion selective dialysis membrane, a cation selective dialysis membrane, a second bipolar membrane, and a negative electrode cell including a negative electrode are sequentially arranged, wherein the anion selective dialysis membrane has a thickness of 70 to 170 $\mu$m.

FIG. 1

**Description**

**CROSS-REFERENCE TO RELATED APPLICATION**

This application claims priority to and the benefit of Korean Patent Application No. 10-2022-0174510 filed in the Korean Intellectual Property Office on December 14, 2022, the entire contents of which are incorporated herein by reference.

**BACKGROUND OF THE INVENTION**

**(a) Field of the Invention**

The present invention relates to an electrodialysis device and a method of manufacturing lithium hydroxide, and more particularly, to an electrodialysis device using a bipolar membrane and a method of manufacturing lithium hydroxide using the same.

**(b) Description of the Related Art**

The global electric vehicle market is expected to increase from 2.3 million in 2019 to 21.9 million in 2030. Battery performance is also continuously improving with high-capacity and longer lifespan. Regarding a positive electrode active material of a secondary battery, a market share of a High-Ni-based battery having a high energy density is expected to increase up to 76% in 2030. Therefore, a demand for lithium hydroxide which is a lithium raw material of a High-Ni-based positive electrode active material is expected to increase together.

Lithium, which is the raw material of a lithium secondary battery, has been conventionally manufactured by extracting a lithium carbonate form from salt lakes, reacting the lithium carbonate with lime to obtain a lithium hydroxide solution, and performing crystallization. However, the lime process is not environmentally friendly, since limestone is produced as a by-product, and carbon dioxide is produced in a large amount during kiln operation for recycling limestone.

In order to solve the problem, a process of manufacturing lithium hydroxide by an electrodialysis method using a bipolar membrane is being studied. An electrodialysis process using a bipolar membrane is an environmentally friendly method which may separate specific ions using current and produce acid and alkaline solutions without occurrence of by-products, but when an inappropriate combination is used as an ion exchange membrane used in an electrodialysis device, a production amount of lithium hydroxide is low as compared with electrical energy used and energy efficiency drops significantly.

**SUMMARY OF THE INVENTION**

The present disclosure attempts to provide a bipolar electrodialysis device having excellent lithium hydroxide production current efficiency and a method of manufacturing lithium hydroxide.

An exemplary embodiment of the present invention provides a bipolar electrodialysis device for manufacturing lithium hydroxide, having a structure in which a positive electrode cell including a positive electrode, a first bipolar membrane, an anion selective dialysis membrane, a cation selective dialysis membrane, a second bipolar membrane, and a negative electrode cell including a negative electrode are sequentially arranged, wherein the anion selective dialysis membrane has a thickness of 70 to 170 $\mu$m.

The first bipolar membrane and the second bipolar membrane may have a thickness of 140 to 255 $\mu$m.

The cation selective dialysis membrane may have a thickness of 70 to 170 $\mu$m.

An applied voltage during operation of the bipolar electrodialysis device may be 2.5 V or less.

The bipolar electrodialysis device may have a lithium hydroxide production current efficiency of 50% or more.

Another exemplary embodiment of the present invention provides a method of manufacturing lithium hydroxide including: preparing a lithium ion-containing aqueous solution; preparing a bipolar electrodialysis device in which a positive electrode cell including a positive electrode, a first bipolar membrane, an anion selective dialysis membrane, a cation selective dialysis membrane, a second bipolar membrane, and a negative electrode cell including a negative electrode are sequentially arranged and the anion selective dialysis membrane has a thickness of 70 to 170 $\mu$m; and using the bipolar electrodialysis device to obtain a lithium hydroxide aqueous solution from the lithium ion-containing aqueous solution, wherein the obtaining of a lithium hydroxide aqueous solution includes: adding the lithium ion-containing aqueous solution between the cation selective dialysis membrane and the anion selective dialysis membrane and adding pure water between the first bipolar membrane and the anion selective dialysis membrane and between the second bipolar membrane and the cation selective dialysis membrane; and applying voltage to the bipolar electrodialysis device to form the lithium hydroxide aqueous solution.

In the preparing of a lithium ion-containing aqueous solution, the lithium ion-containing aqueous solution may be a lithium sulfate aqueous solution or a lithium chloride aqueous solution.

In the preparing of a bipolar electrodialysis device, the first bipolar membrane and the second bipolar membrane may have a thickness of 140 to 255 $\mu$m.

In the preparing of a bipolar electrodialysis device, the cation selective dialysis membrane may have a thickness of 70 to 170 $\mu$m.

The obtaining of a lithium hydroxide aqueous solution may be forming an acidic aqueous solution between the first bipolar membrane and the anion selective dialysis membrane, forming a lithium hydroxide aqueous solution between the cation selective dialysis membrane and the second bipolar membrane, and forming a desalted solution between the anion selective dialysis membranes and between the cation selective dialysis membranes.

In the obtaining of a lithium hydroxide aqueous solution, the applied voltage may be 2.5 V or less.

In the obtaining of a lithium hydroxide aqueous solution, a difference between a maximum pH value and a minimum pH value of a solution positioned in a space between the anion selective dialysis membrane and the cation selective dialysis membrane may be adjusted to 2 or less.

In the obtaining of a lithium hydroxide aqueous solution, a lithium concentration in the obtained lithium hydroxide aqueous solution may be 10 g/L or more.

In the obtaining of a lithium hydroxide aqueous solution, the desalted solution may be recycled as an adding solution which adds the lithium ion-containing aqueous solution between the cation selective dialysis membrane and the anion selective dialysis membrane.

After the obtaining of a lithium hydroxide aqueous solution, concentrating the obtained lithium hydroxide aqueous solution to perform crystallization; and drying the crystallized lithium hydroxide to obtain lithium hydroxide in a powder form may be further included.

After the obtaining of a lithium hydroxide aqueous solution, electrodialyzing the obtained lithium hydroxide aqueous solution to concentrate lithium in the obtained lithium hydroxide aqueous solution may be further included.

A filtrate remaining after the electrodialysis may be concentrated by reverse osmosis and reused in electrodialysis.

A lithium hydroxide production current efficiency may be 50% or more.

The bipolar membrane electrodialysis device and the method of manufacturing lithium hydroxide according to the present invention may improve lithium hydroxide production current efficiency by appropriately adjusting physical properties and other process conditions of the bipolar membrane, the cation selective dialysis membrane, and the anion selective dialysis membrane used in the electrodialysis device, and also may secure economic feasibility by a high lithium concentration in the obtained lithium hydroxide aqueous solution.

## BRIEF DESCRIPTION OF THE DRAWINGS

FIG. 1 is a schematic diagram of a bipolar electrodialysis device according to an exemplary embodiment of the present invention.

FIG. 2 is a graph showing a salt conductivity according to a concentration time during operation of the bipolar electrodialysis device according to Example 1.

FIG. 3 is a graph showing a salt conductivity according to a concentration time during operation of the bipolar electrodialysis device according to Comparative Example 1.

FIG. 4 is a graph showing a salt conductivity according to a concentration time during operation of the bipolar electrodialysis device according to Comparative Example 2.

FIG. 5 is a graph showing a salt conductivity and a salt pH according to a concentration time during operation of the bipolar electrodialysis device according to Comparative Example 5.

## DETAILED DESCRIPTION OF THE EMBODIMENTS

The terms such as first, second, and third are used for describing various parts, components, areas, layers, and/or sections, but are not limited thereto. These terms are used only for distinguishing one part, component, area, layer, or section from other parts, components, areas, layers, or sections. Therefore, a first component, part, area, layer, or section described below may be mentioned as a second component, part, area, layer, or section without departing from the scope of the present invention.

The terminology used herein is only for mentioning a certain example, and is not intended to limit the present invention. Singular forms used herein also include plural forms unless otherwise stated clearly to the contrary. The meaning of "comprising" used in the specification is embodying certain characteristics, regions, integers, steps, operations, elements, and/or components, but is not excluding the presence or addition of other characteristics, regions, integers, steps, operations, elements, and/or components.

When it is mentioned that a part is "on" or "above" the other part, it means that the part is directly on or above the other part or another part may be interposed therebetween. In contrast, when it is mentioned that a part is "directly on" the other part, it means that nothing is interposed therebetween.

Though not defined otherwise, all terms including technical terms and scientific terms used herein have the same meaning as commonly understood by a person with ordinary skill in the art to which the present invention pertain. Terms defined in commonly used dictionaries are further interpreted as having a meaning consistent with the related technical literatures and the currently disclosed description, and unless otherwise defined, they are not interpreted as having an ideal or very formal meaning.

In addition, unless particularly mentioned, % refers to wt%, and 1 ppm is 0.0001 wt%.

In the present specification, the term "combination(s) thereof" described in the Markush format refers to a mixture or combination of one or more selected from the group consisting of the constituent elements described in the Markush format, and refers to inclusion of one or more selected from the group consisting of the constituent elements.

Hereinafter, an exemplary embodiment of the present invention will be described in detail so that a person with ordinary skill in the art to which the present invention pertains may easily carry out the invention. As those skilled in the art would realize, the described embodiments may be modified in various different ways, all without departing from the spirit or scope of the present invention.

1. Bipolar electrodialysis device

An exemplary embodiment of the present invention provides a bipolar electrodialysis device for manufacturing lithium hydroxide, having a structure in which a positive electrode cell including a positive electrode, a first bipolar membrane, an anion selective dialysis membrane, a cation selective dialysis membrane, a second bipolar membrane, and a negative electrode cell including a negative electrode are sequentially arranged, wherein the anion selective dialysis membrane has a thickness of 70 to 170 $\mu$m.

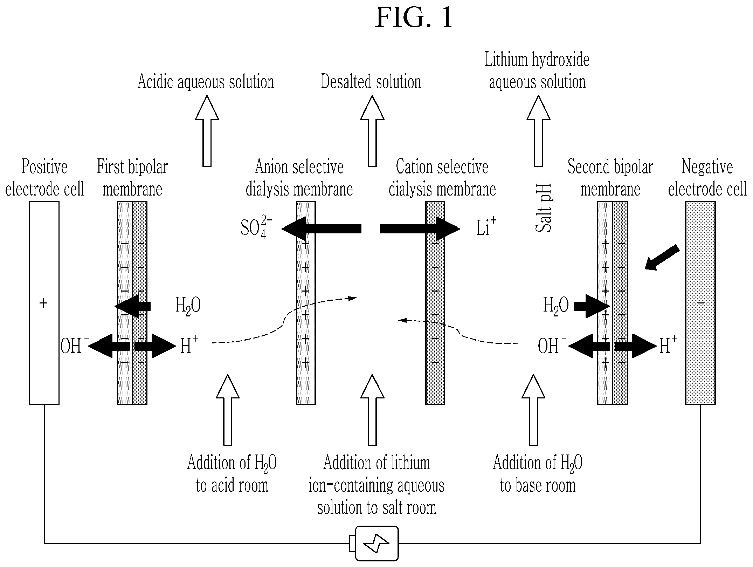

FIG. 1 is a schematic diagram of the bipolar electrodialysis device according to an exemplary embodiment of the present invention.

Referring to FIG. 1, the bipolar electrodialysis device according to an exemplary embodiment of the present invention has a structure in which a positive electrode cell including a positive electrode, a first bipolar membrane, an anion selective dialysis membrane, a cation selective dialysis membrane, a second bipolar membrane, and a negative electrode cell including a negative electrode are sequentially arranged.

Since the cation selective dialysis membrane has an anion group inside, it allows only a cation to selectively pass through, and since the anion selective dialysis membrane has a cation group inside, it allows only an anion to selectively pass through. Since the bipolar membrane has a water decomposition catalyst, it hydrolyzes water within an electric field to generate a hydrogen ion and a hydroxide ion.

Though it is not shown in FIG. 1, an acidic solution tank may be further placed outside the positive electrode cell, and a basic solution tank may be further placed outside the negative electrode cell. A solution positioned between the first bipolar membrane and the anion selective dialysis membrane may be circulated through the acidic solution tank, and a solution positioned between the cation selective dialysis membrane and the second bipolar membrane may be circulated through the basic solution tank.

Hereinafter, the operation principle of the bipolar electrodialysis device according to an exemplary embodiment of the present invention will be described.

First, a lithium ion-containing aqueous solution is added between the anion selective dialysis membrane and the cation selective dialysis membrane, and pure water is added between the first bipolar membrane and the anion selective dialysis membrane and between the cation selective dialysis membrane and the second bipolar membrane, respectively.

Herein, when voltage is applied to the bipolar electrodialysis device to which the lithium ion-containing aqueous solution and the pure water have been added to cause current to flow therethrough, an acidic solution is formed between the first bipolar membrane and the anion selective dialysis membrane, a lithium hydroxide aqueous solution is formed between the cation selective dialysis membrane and the second bipolar membrane, and a desalted solution which is a residual solution remaining from the added lithium-containing aqueous solution in which a lithium salt is not reacted is formed between the anion selective dialysis membrane and the cation selective dialysis membrane.

Formation of the acidic aqueous solution and the lithium hydroxide aqueous solution as described above will be described below in more detail.

First, a process of forming an acidic aqueous solution will be described. The pure water added between the first bipolar membrane and the anion selective dialysis membrane is hydrolyzed on a surface of the first bipolar membrane to be decomposed into a hydrogen ion and a hydroxide ion. Herein, the decomposed hydroxide ion moves to a positive electrode cell, and a decomposed hydrogen ion moves between the first bipolar membrane and the anion selective dialysis membrane. Meanwhile, the anion of the lithium ion-containing aqueous solution added between the anion selective dialysis membrane and the cation selective dialysis membrane passes through the anion selective dialysis membrane and moves between the first bipolar membrane and the anion selective dialysis membrane. Further, the hydrogen ion and the anion are concentrated between the first bipolar membrane and the anion selective dialysis membrane to form an acidic aqueous solution.

Next, a process of forming the lithium hydroxide aqueous solution will be described. The pure water added between the cation selective dialysis membrane and the second bipolar membrane is hydrolyzed on a surface of the second bipolar membrane to be decomposed into a hydrogen ion and a hydroxide ion. Herein, the decomposed hydrogen ion moves to the negative electrode cell, and the decomposed hydroxide ion moves between the cation selective dialysis membrane and the second bipolar membrane. Meanwhile, the lithium ion of the lithium ion-containing aqueous solution added between the anion selective dialysis membrane and the cation selective dialysis membrane passes through the cation selective dialysis membrane and moves between the cation selective dialysis membrane and the second bipolar membrane. Further, the hydroxide ion and the lithium ion are concentrated between the cation selective dialysis membrane and the second bipolar membrane to form the lithium hydroxide aqueous solution.

Herein, in order to increase current efficiency when preparing the lithium hydroxide aqueous solution and the acidic aqueous solution from the lithium ion-containing aqueous solution as described above, a pure water hydrolyzation rate and a separation rate of a lithium ion and an anion included in the lithium-containing aqueous solution on a bipolar membrane surface should be appropriately adjusted. In the case in which the rates are not appropriately adjusted, for example, the pure water hydrolyzation rate is higher than the separation rate of a lithium ion and an anion included in the lithium-containing aqueous solution, the hydrolyzed hydrogen ion and hydroxide ion do not meet their counter ion. Accordingly, a phenomenon in which the hydrogen ion hydrolyzed in the first bipolar membrane passes through the anion selective dialysis membrane, and the hydroxide ion hydrolyzed in the second bipolar membrane passes through the cation selective dialysis membrane, so called, a back diffusion phenomenon occurs. As a result, electrical energy added to the bipolar electrodialysis device is not fully used in the production of lithium hydroxide, resulting in lowered current efficiency.

Therefore, in order to increase the lithium hydroxide production current efficiency, it is important to appropriately adjust the physical properties of the anion selective dialysis membrane, the bipolar membrane, and the cation selective dialysis membrane, thereby maintaining proper balances between the hydrolysis rate and the separation rate of the lithium ion and the anion of the lithium ion-containing aqueous solution, and the inventors of the present invention repeated the study thereon, thereby completing the present invention.

The anion selective dialysis membrane of the bipolar electrodialysis device according to an exemplary embodiment of the present invention may have a thickness of 70 to 170 $\mu$m, and more specifically 75 to 150 $\mu$m or 80 to 120 $\mu$m.

In the present specification, the thickness of the dialysis membrane refers to a thickness measured with digital micrometer equipment after drying at 100°C for 6 hours under atmosphere pressure.

When the thickness of the anion selective dialysis membrane is too small, a back diffusion phenomenon of the hydrogen ion hydrolyzed in the first bipolar membrane is increased to decrease the lithium hydroxide production current efficiency, and when the thickness of the anion selective dialysis membrane is too large, membrane resistance is excessively increased to lower current, thereby decreasing the lithium hydroxide production current efficiency.

Further, the first bipolar membrane and the second bipolar membrane may have a thickness of 140 to 255 $\mu$m, and more specifically 180 to 255 $\mu$m.

In the present specification, the thickness of the bipolar membrane refers to a thickness measured with digital micrometer equipment after drying at 100°C for 6 hours under atmospheric pressure.

When the thickness of the first bipolar membrane and the second bipolar membrane is too small, $H^+$ and $OH^-$ which have a rapid ion movement speed are produced too much and back diffusion to a salt room occurs a lot, so that lithium hydroxide production current efficiency may be decreased, and when the thickness of the first bipolar membrane and the second bipolar membrane is too large, hydrolysis voltage becomes too high, so that lithium hydroxide production current efficiency may be decreased.

In addition, the cation selective dialysis membrane may have a thickness of 70 to 170 $\mu$m, and more specifically 75 to 150 $\mu$m or 80 to 120 $\mu$m.

In the present specification, the thickness of the dialysis membrane refers to a thickness measured with a digital micrometer after drying at 100°C for 6 hours under atmospheric pressure.

When the thickness of the cation selective dialysis membrane is too small, the pH of the solution positioned between the anion selective dialysis membrane and the cation selective dialysis membrane is rapidly increased, so that impurity precipitation phenomenon occurs and lithium hydroxide production current efficiency may be decreased, and when the thickness of the cation selective dialysis membrane is too large, membrane resistance is high, so that current is not applied well.

Meanwhile, applied voltage during operation of the bipolar electrodialysis device may be 2.5 V or less, and more specifically 2.4 V or less. When the applied voltage is too high, degradation of a membrane due to overheating during operation is caused, so that lithium hydroxide production current efficiency may be poor.

Since the physical properties and the applied voltage of the anion selective dialysis membrane, the bipolar membrane, and the cation selective dialysis membrane are appropriately adjusted as such, the lithium hydroxide production current efficiency of the bipolar electrodialysis device according to the present invention may be as high as 50% or more.


2. Method of manufacturing lithium hydroxide

Another exemplary embodiment of the present invention provides a method of manufacturing lithium hydroxide including: preparing a lithium ion-containing aqueous solution; preparing a bipolar electrodialysis device in which a positive electrode cell including a positive electrode, a first bipolar membrane, an anion selective dialysis membrane, a cation selective dialysis membrane, a second bipolar membrane, and a negative electrode cell including a negative electrode are sequentially arranged and the anion selective dialysis membrane has a thickness of 70 to 170 $\mu$m; and using the bipolar electrodialysis device to obtain a lithium hydroxide aqueous solution from the lithium ion-containing aqueous solution, wherein the obtaining of a lithium hydroxide aqueous solution includes: adding the lithium ion-containing aqueous solution between the cation selective dialysis membrane and the anion selective dialysis membrane and adding pure water between the first bipolar membrane and the anion selective dialysis membrane and between the second bipolar membrane and the cation selective dialysis membrane; and applying voltage to the bipolar electrodialysis device to form the lithium hydroxide aqueous solution.

Hereinafter, the method of manufacturing a lithium hydroxide according to another exemplary embodiment of the present invention will be described in detail step by step.

First, a lithium ion-containing aqueous solution is prepared.

In the preparing of a lithium ion-containing aqueous solution, the lithium ion-containing aqueous solution may be a lithium sulfate aqueous solution or a lithium chloride aqueous solution.

A process of obtaining the lithium sulfate aqueous solution or the lithium chloride aqueous solution is not particularly limited.

In the lithium sulfate aqueous solution or the lithium chloride aqueous solution, a lithium concentration may be 5 g/L to 14 g/L. When the lithium concentration satisfies the range, obtaining efficiency of lithium hydroxide may be excellent.

Next, a bipolar electrodialysis device is prepared.

Herein, in the bipolar electrodialysis device, a positive electrode cell including a positive electrode, a first bipolar membrane, an anion selective dialysis membrane, a cation selective dialysis membrane, a second bipolar membrane, and a negative electrode cell including a negative electrode are sequentially arranged.

Particularly, the anion selective dialysis membrane may have a thickness of 70 to 170 $\mu$m, and more specifically 75 to 150 $\mu$m or 80 to 120 $\mu$m. Since benefits of adjusting the thickness of the anion selective dialysis membrane are as described above, their description will be omitted.

Further, the first bipolar membrane and the second bipolar membrane may have a thickness of 140 to 255 $\mu$m, and more specifically 180 to 255 $\mu$m. Since benefits of adjusting the thickness of the first bipolar membrane and the second bipolar membrane is as described above, their description will be omitted.

In addition, the cation selective dialysis membrane may have a thickness of 70 to 170 $\mu$m, and more specifically 75 to 150 $\mu$m or 80 to 120 $\mu$m. Since benefits of adjusting the thickness of the cation selective dialysis membrane are as described above, their description will be omitted.

Next, the bipolar electrodialysis device is used to obtain the lithium hydroxide aqueous solution from the lithium ion-containing aqueous solution.

More specifically, the obtaining of a lithium hydroxide aqueous solution includes: adding the lithium ion-containing aqueous solution between the cation selective dialysis membrane and the anion selective dialysis membrane and adding pure water between the first bipolar membrane and the anion selective dialysis membrane and between the second bipolar membrane and the cation selective dialysis membrane; and applying voltage to the bipolar electrodialysis device to form a lithium hydroxide aqueous solution.

Herein, the obtaining a lithium hydroxide aqueous solution may be forming an acidic aqueous solution between the first bipolar membrane and the anion selective dialysis membrane, forming a lithium hydroxide aqueous solution between the cation selective dialysis membrane and the second bipolar membrane, and forming a desalted solution between the anion selective dialysis membrane and the cation selective dialysis membrane. Since the process principle is as mentioned above, its description will be omitted.

In particular, the applied voltage may be 2.5 V or less, and more specifically 2.4 V or less. Since benefits of adjusting the applied voltage is as described above, their description will be omitted.

Further, a difference between a maximum pH value and a minimum pH value of the solution positioned in a space between the anion selective dialysis membrane and the cation selective dialysis membrane may be adjusted to 2 or less, and more specifically 1.5 or less. A pH value variation range of the solution positioned in a space between the anion selective dialysis membrane and the cation selective dialysis membrane may be used as a measure showing the extent to which the back diffusion phenomenon occurs as described above. Thus, since the difference between a maximum pH value and a minimum pH value is adjusted to the range, occurrence of the back diffusion phenomenon is minimized and lithium hydroxide production current efficiency may be excellent.

Meanwhile, the desalted solution may be recycled as an adding solution which adds the lithium ion-containing aqueous solution between the cation selective dialysis membrane and the anion selective dialysis membrane. Accordingly, economic feasibility may be increased and a lithium loss may be decreased during process operation.

If necessary, optionally, after the obtaining of a lithium hydroxide aqueous solution, concentrating the obtained lithium hydroxide aqueous solution to perform crystallization; and drying the crystallized lithium hydroxide to obtain lithium hydroxide in a powder form may be further included. Accordingly, the lithium hydroxide may be recovered in a powder form.

If necessary, optionally, after the obtaining of a lithium hydroxide aqueous solution, electrodialyzing the obtained lithium hydroxide aqueous solution to concentrate lithium in the obtained lithium hydroxide aqueous solution may be further included.

Herein, a filtrate remaining after the electrodialysis may be concentrated by reverse osmosis and reused in electrodialysis.

The method of manufacturing lithium hydroxide according to another exemplary embodiment of the present invention may have a lithium hydroxide production current efficiency of 50% or more.

In addition, a lithium concentration in the obtained lithium hydroxide aqueous solution may be 10 g/L or more, and more specifically 15 or 20 g/L. In general, as a lithium concentration target of the obtained lithium hydroxide aqueous solution is lowered, the lithium hydroxide production current efficiency tends to be increased. However, when the lithium concentration in the obtained lithium hydroxide aqueous solution is blindly lowered in order to increase the lithium hydroxide production current efficiency, a moisture dry amount required for the lithium hydroxide crystallization in a latter stage process is increased.

According to the method of manufacturing lithium hydroxide according to another exemplary embodiment, the lithium concentration in the obtained lithium hydroxide aqueous solution is sufficiently high at 10 g/L or more, and since the electrodialysis process conditions are controlled as described above, even the lithium hydroxide production current efficiency may be increased.

Hereinafter, the exemplary embodiment of the present invention will be described in more detail by the examples. However, the following examples are only a preferred example of the present invention, and the present invention is not limited by the following examples.

Example 1

(1) Preparation of bipolar electrodialysis device

A first bipolar membrane having a thickness of 250 μm, an anion selective dialysis membrane having a thickness of 100 μm, a cation selective dialysis membrane having a thickness of 100 μm, and a second bipolar membrane having a 250 μm thickness (BPU) were used to prepare a bipolar electrodialysis device.

(2) Operation of bipolar electrodialysis device

First, a lithium sulfate aqueous solution and pure water were prepared. At this time, a lithium concentration in the lithium sulfate aqueous solution was 10.5 g/L.

Thereafter, the lithium sulfate aqueous solution was added between the cation selective dialysis membrane and the anion selective dialysis membrane of the prepared bipolar electrodialysis device, and pure water was added between the first bipolar membrane and the anion selective dialysis membrane and between the second bipolar membrane and the cation selective dialysis membrane of the prepared bipolar electrodialysis device.

Thereafter, a voltage of 2.3 V was applied to the bipolar electrodialysis device to operate the bipolar electrodialysis device, thereby obtaining a lithium hydroxide aqueous solution.

Comparative Example 1: Anion selective dialysis membrane having thickness of 60 μm

A bipolar electrodialysis device was prepared and operated in the same manner as in Example 1, except that the thickness of the anion selective dialysis membrane was 60 μm.

Comparative Example 2: Anion selective dialysis membrane having thickness of 180 μm

A bipolar electrodialysis device was prepared and operated in the same manner as in Example 1, except that the thickness of the anion selective dialysis membrane was 180 μm.

Comparative Example 3: First bipolar membrane and second bipolar membrane having thickness of 130 μm

A bipolar electrodialysis device was prepared and operated in the same manner as in Example 1, except that the thickness of the first bipolar membrane and the second bipolar membrane was 130 μm.

Comparative Example 4: First bipolar membrane and second bipolar membrane having thickness of 260 μm

A bipolar electrodialysis device was prepared and operated in the same manner as in Example 1, except that the thickness of the first bipolar membrane and the second bipolar membrane was 260 μm.

Comparative Example 5: Cation selective dialysis membrane having thickness of 60 μm

A bipolar electrodialysis device was prepared and operated in the same manner as in Example 1, except that the thickness of the cation selective dialysis membrane was 60 μm.

Comparative Example 6: Cation selective dialysis membrane having thickness of 180 μm

A bipolar electrodialysis device was prepared and operated in the same manner as in Example 1, except that the thickness of the anion selective dialysis membrane was 180 μm.

Comparative Example 7: Applied voltage of 3.0 V

A bipolar electrodialysis device was prepared and operated in the same manner as in Example 1, except that a voltage of 3.0 V was applied during operation of the bipolar electrodialysis device.
In the following Table 1, the physical properties and the applied voltages of the bipolar electrodialysis devices of Example 1 and Comparative Examples 1 to 7 are summarized.

(Table 1)

| Classificatio n | Anion selective dialysis membrane thickness (μm) | First and second bipolar membrane thickness (μm) | Cation selective dialysis membrane thickness (μm) | Applied voltage (V) |
|---|---|---|---|---|
| Example 1 | 100 | 250 | 100 | 2.3 |
| Comparativ e Example 1 | 60 | 250 | 100 | 2.3 |
| Comparativ e Example 2 | 180 | 250 | 100 | 2.3 |
| Comparativ e Example 3 | 100 | 130 | 100 | 2.3 |
| Comparativ e Example 4 | 100 | 260 | 100 | 2.3 |
| Comparativ e Example 5 | 100 | 250 | 60 | 2.3 |
| Comparativ e Example 6 | 100 | 250 | 180 | 2.3 |
| Comparativ e Example 7 | 100 | 250 | 100 | 3.0 |

Experimental Example 1: Salt conductivity or pH evaluation

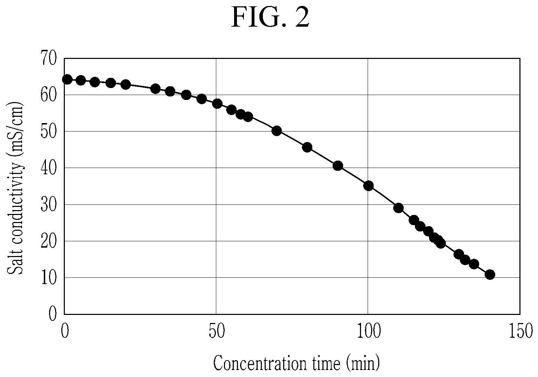

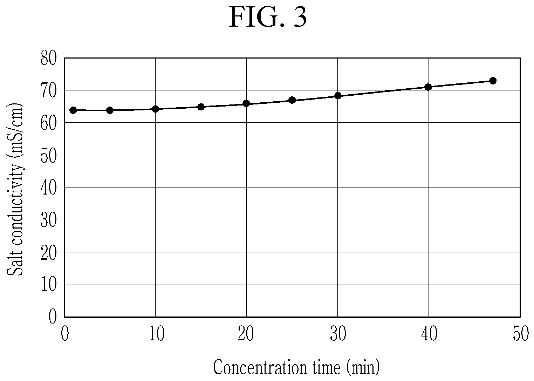

Salt conductivity or salt pH was measured depending on a concentration time during operation of the bipolar electrodialysis devices according to Example 1 and Comparative Example 1, 2, and 5, and the results are shown in FIGS. 2 to 5, respectively. At this time, the salt conductivity or the salt pH refers to a conductivity or pH of a solution positioned in a space between the anion selective dialysis membrane and the cation selective dialysis membrane.
Referring to FIG. 2, since the bipolar electrodialysis device according to Example 1 had an anion selective dialysis membrane thickness, first and second bipolar membrane thickness, a cation selective dialysis membrane thickness, and applied voltage which were all appropriately adjusted, it was confirmed that the salt conductivity was decreased to a good level and ion separation was performed well, and thus, it was expected to have very good lithium hydroxide production current efficiency.
Referring to FIG. 3, since the bipolar electrodialysis device according to Comparative Example 1 had a too small thickness of the anion selective dialysis membrane, it was confirmed that back diffusion in which a hydrogen ion passes through the anion selective dialysis membrane and moves to a space between the anion selective dialysis membrane and the cation selective dialysis membrane occurred, so that the salt conductivity was steadily increased without being lowered. Accordingly, it was expected that the lithium hydroxide production current efficiency would be decreased.

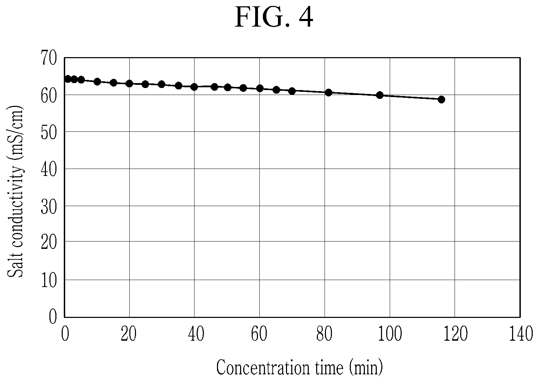

Referring to FIG. 4, since the bipolar electrodialysis device according to Comparative Example 2 had a large thickness of the anion selective dialysis membrane, it was confirmed that current was rapidly decreased with an increase of membrane resistance and the salt conductivity was decreased, but the decrease rate was very low. Accordingly, it was expected that the lithium hydroxide production current efficiency would be decreased.

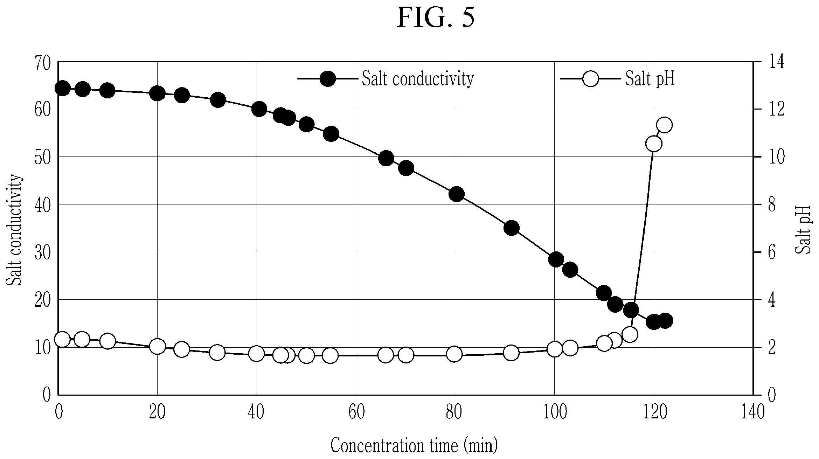

Referring to FIG. 5, since the bipolar electrodialysis device according to Comparative Example 5 had a small thickness of the cation selective dialysis membrane, it was confirmed that the pH of the salt was rapidly increased in the latter part of the operating time and an impurity precipitation phenomenon occurred. Accordingly, it was expected that the lithium hydroxide production current efficiency was decreased.

Experimental Example 2: Evaluation of difference between maximum and minimum salt pH values

A difference between a maximum pH value and a minimum pH value of the solution positioned in a space between the anion selective dialysis membrane and the cation selective dialysis membrane during the operation of the bipolar electrodialysis device according to Example 1 and Comparative Examples 1 to 7 was evaluated, and the results are shown in the following Table 2.

(Table 2)

| Classification | Difference between maximum salt pH value and minimum salt pH value (pH) |
|---|---|
| Example 1 | 1.0 |
| Comparative Example 1 | 2.5 |
| Comparative Example 2 | Inoperable |
| Comparative Example 3 | 2.5 |
| Comparative Example 4 | Inoperable |
| Comparative Example 5 | 11.5 |
| Comparative Example 6 | Inoperable |
| Comparative Example 7 | 1.0 (operable, but occurrence of degradation of membrane when continuously operated) |

Referring to Table 2, it was confirmed that the bipolar electrodialysis device according to Example 1 had a small different between the maximum value and the minimum value of 1.0 due to a small change in the pH value during operation, but the bipolar electrodialysis devices according to Comparative Examples 1, 3, and 5 had a large change in the pH value during operation and had a difference between the maximum value and the minimum value of more than 2. Further, in Comparative Example 7, it was confirmed that the difference between the maximum and minimum values was satisfied, but the device was overheated during operation to cause degradation in a polymer membrane. Meanwhile, it was confirmed that the bipolar electrodialysis devices according to Comparative Example 2, 4, and 6 did not work.

Experimental Example 3: Evaluation of lithium hydroxide production current efficiency

The lithium hydroxide production current efficiency of the bipolar electrodialysis devices operated according to Example 1 and Comparative Examples 1 to 7 was measured, and the results are shown in the following Table 3. More specifically, the lithium hydroxide production current efficiency was derived by the following method.

[Equation 1]

$$\text{Lithium hydroxide production current efficiency} =$$

$$\frac{\text{Li production amount } [mol] \times \text{Faraday constant } [C/mol]}{\text{Current density } [A/m^2] \times \text{Membrane area } [m^2] \times \text{Time}[s]}$$

(Table 3)

| Classification | Lithium hydroxide production current efficiency(%) |
|---|---|
| Example 1 | 52 |
| Comparative Example 1 | 37 |
| Comparative Example 2 | inoperable |
| Comparative Example 3 | 25 |
| Comparative Example 4 | Inoperable |
| Comparative Example 5 | 42 |
| Comparative Example 6 | inoperable |
| Comparative Example 7 | 48 |

Referring to Table 3, it was confirmed that the lithium hydroxide production current efficiency of the bipolar electrodialysis device according to Example 1 was very good at 50% or more, but the lithium hydroxide production current efficiency of the bipolar electrodialysis devices according to Comparative Examples 1, 3, 5, and 7 was poor at 50% or less. Meanwhile, it was confirmed that the bipolar electrodialysis devices according to Comparative Examples 2, 4, and 6 did not work.

Experimental Example 4: Evaluation of lithium concentration in obtained lithium hydroxide aqueous solution

The lithium concentration in the lithium hydroxide aqueous solutions obtained according to Example 1 and Comparative Example 1 to 7 was measured, and the results are shown in the following Table 4.

(Table 4)

| Classification | Lithium concentration in obtained lithium hydroxide aqueous solution (g/L) |
|---|---|
| Example 1 | 20 |
| Comparative Example 1 | 20 |
| Comparative Example 2 | inoperable |
| Comparative Example 3 | 20 |
| Comparative Example 4 | inoperable |
| Comparative Example 5 | 20 |
| Comparative Example 6 | inoperable |
| Comparative Example 7 | 20 |

Referring to Table 4, it was confirmed that the lithium concentration in the lithium hydroxide aqueous solution obtained according to Example 1 was sufficiently high at 20 g/L.

Thus, it was confirmed that the method of manufacturing lithium hydroxide according to the present invention had lithium hydroxide production current efficiency improved by 50% or more and also had an increased lithium concentration of the obtained lithium hydroxide aqueous solution.

It was confirmed that the lithium concentration of the lithium hydroxide aqueous solution obtained according to Example 1 was high at 10 g/L or more, but the lithium concentration of the lithium hydroxide aqueous solutions obtained according to Comparative Examples 1 to 7 was low at 10 g/L or less.

Hereinabove, the preferred exemplary embodiments of the present invention have been described, but the present invention is not limited thereto, and may be variously modified within the scope of the claims, the detailed description of the invention, and the attached drawing, which also belongs to the scope of the present invention, of course.

Accordingly, the substantial right scope of the present invention is defined by the appended claims and the equivalents thereto.

**Claims**

1.  A bipolar electrodialysis device for manufacturing lithium hydroxide,

    having a structure in which a positive electrode cell including a positive electrode, a first bipolar membrane, an anion selective dialysis membrane, a cation selective dialysis membrane, a second bipolar membrane, and a negative electrode cell including a negative electrode are sequentially arranged,
    wherein the anion selective dialysis membrane has a thickness of 70 to 170 $\mu$m.

2.  The bipolar electrodialysis device of claim 1, wherein:
    the first bipolar membrane and the second bipolar membrane have a thickness of 140 to 255 $\mu$m.

3.  The bipolar electrodialysis device of claim 1, wherein:
    the cation selective dialysis membrane has a thickness of 70 to 170 $\mu$m.

4.  The bipolar electrodialysis device of claim 1, wherein:
    an applied voltage during operation of the bipolar electrodialysis device is 2.5 V or less.

5.  The bipolar electrodialysis device of claim 1, wherein:
    the bipolar electrodialysis device has a lithium hydroxide production current efficiency of 50% or more.

6.  A method of manufacturing lithium hydroxide, the method comprising:

    preparing a lithium ion-containing aqueous solution;
    preparing a bipolar electrodialysis device in which a positive electrode cell including a positive electrode, a first bipolar membrane, an anion selective dialysis membrane, a cation selective dialysis membrane, a second bipolar membrane, and a negative electrode cell including a negative electrode are sequentially arranged and the anion selective dialysis membrane has a thickness of 70 to 170 $\mu$m; and
    using the bipolar electrodialysis device to obtain a lithium hydroxide aqueous solution from the lithium ion-containing aqueous solution,
    wherein the obtaining of a lithium hydroxide aqueous solution includes:

    adding the lithium ion-containing aqueous solution between the cation selective dialysis membrane and the anion selective dialysis membrane and adding pure water between the first bipolar membrane and the anion selective dialysis membrane and between the second bipolar membrane and the cation selective dialysis membrane; and
    applying voltage to the bipolar electrodialysis device to form the lithium hydroxide aqueous solution.

7.  The method of manufacturing lithium hydroxide of claim 6, wherein:

    in the preparing of a lithium ion-containing aqueous solution,
    the lithium ion-containing aqueous solution is a lithium sulfate aqueous solution or a lithium chloride aqueous solution.

8.  The method of manufacturing lithium hydroxide of claim 6, wherein:

    in the preparing of a bipolar electrodialysis device,
    the first bipolar membrane and the second bipolar membrane have a thickness of 140 to 255 $\mu$m.

9.  The method of manufacturing lithium hydroxide of claim 6, wherein:

    in the preparing of a bipolar electrodialysis device,
    the cation selective dialysis membrane has a thickness of 70 to 170 $\mu$m.

10. The method of manufacturing lithium hydroxide of claim 6, wherein:

    the obtaining of a lithium hydroxide aqueous solution is
    forming an acidic aqueous solution between the first bipolar membrane and the anion selective dialysis membrane, forming the lithium hydroxide aqueous solution between the cation selective dialysis membrane and the second bipolar membrane, and forming a desalted solution between the anion selective dialysis membrane and the cation selective dialysis membrane.

11. The method of manufacturing lithium hydroxide of claim 6, wherein:

in the obtaining of a lithium hydroxide aqueous solution,
the applied voltage is 2.5 V or less.

12. The method of manufacturing lithium hydroxide of claim 6, wherein:

in the obtaining of a lithium hydroxide aqueous solution,
a difference between a maximum pH value and a minimum pH value of a solution positioned in a space between the anion selective dialysis membrane and the cation selective dialysis membrane is adjusted to 2 or less.

13. The method of manufacturing lithium hydroxide of claim 6, wherein:

in the obtaining of a lithium hydroxide aqueous solution,
a lithium concentration of the obtained lithium hydroxide aqueous solution is 10 g/L or more

14. The method of manufacturing lithium hydroxide of claim 6, wherein:

in the obtaining of a lithium hydroxide aqueous solution,
the desalted solution is recycled as an adding solution which adds the lithium ion-containing aqueous solution between the cation selective dialysis membrane and the anion selective dialysis membrane.

15. The method of manufacturing lithium hydroxide of claim 6, further comprising:

after the obtaining of a lithium hydroxide aqueous solution,
concentrating the obtained lithium hydroxide aqueous solution to perform crystallization; and
drying the crystallized lithium hydroxide to obtain lithium hydroxide in a powder form.

16. The method of manufacturing lithium hydroxide of claim 6, further comprising:

after the obtaining of a lithium hydroxide aqueous solution,
electrodialyzing the obtained lithium hydroxide aqueous solution to concentrate lithium in the obtained lithium hydroxide aqueous solution.

17. The method of manufacturing lithium hydroxide of claim 16, wherein:
a filtrate remaining after the electrodialysis is concentrated by reverse osmosis and reused in electrodialysis.

18. The method of manufacturing lithium hydroxide of claim 6, wherein:
the method has a lithium hydroxide production current efficiency of 50% or more.

FIG. 1

FIG. 2

# FIG. 3

FIG. 4

FIG. 5

EP 4 635 608 A1

## INTERNATIONAL SEARCH REPORT

| | |
|---|---|
| International application No. | **PCT/KR2023/017902** |

**A. CLASSIFICATION OF SUBJECT MATTER**

**B01D 61/44**(2006.01)i; **C25B 1/16**(2006.01)i

According to International Patent Classification (IPC) or to both national classification and IPC

**B. FIELDS SEARCHED**

Minimum documentation searched (classification system followed by classification symbols)

B01D 61/44(2006.01); B01D 21/01(2006.01); B01D 61/42(2006.01); B01D 61/46(2006.01); C01D 15/00(2006.01); C01D 15/02(2006.01); C22B 9/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 수산화리튬(lithium hydroxide), 전기투석(electrodialysis), 바이폴라막(bipolar membrane), 양이온(cation), 음이온(anion), 두께(thickness)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2016-0133860 A (RESEARCH INSTITUTE OF INDUSTRIAL SCIENCE & TECHNOLOGY) 23 November 2016 (2016-11-23)<br>See claims 1-4; paragraphs [0043] and [0075]; and figures 2-3. | 1-18 |
| Y | CN 211677202 U (YABANG GREEN PROCESS AND NEW MATERIALS RESEARCH INSTITUTE NANJING CO., LTD.) 16 October 2020 (2020-10-16)<br>See claims 1-7; and figure 1. | 1-18 |
| Y | KR 10-2186074 B1 (DAEJIN UNIVERSITY CENTER FOR EDUCATIONAL INDUSTRIAL COOPERATION) 07 December 2020 (2020-12-07)<br>See paragraph [0110]; and table 2. | 1-18 |
| A | KR 10-2022-0086862 A (DAEJIN UNIVERSITY CENTER FOR EDUCATIONAL INDUSTRIAL COOPERATION) 24 June 2022 (2022-06-24)<br>See entire document. | 1-18 |

✓ Further documents are listed in the continuation of Box C.　　✓ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **20 February 2024** | **20 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/017902**

### C. DOCUMENTS CONSIDERED TO BE RELEVANT

| Category* | Citation of document, with indication, where appropriate, of the relevant passages | Relevant to claim No. |
|---|---|---|
| A | JP 2012-171827 A (JX NIPPON MINING & METALS CORP.) 10 September 2012 (2012-09-10)<br>See entire document. | 1-18 |
| A | KR 10-2019-0076677 A (POSCO et al.) 02 July 2019 (2019-07-02)<br>See entire document. | 1-18 |

Form PCT/ISA/210 (second sheet) (July 2022)

INTERNATIONAL SEARCH REPORT
Information on patent family members

International application No.

**PCT/KR2023/017902**

| Patent document cited in search report | | | Publication date (day/month/year) | Patent family member(s) | | | Publication date (day/month/year) |
|---|---|---|---|---|---|---|---|
| KR | 10-2016-0133860 | A | 23 November 2016 | CN | 107614435 | A | 19 January 2018 |
| | | | | CN | 114212807 | A | 22 March 2022 |
| | | | | EP | 3326974 | A1 | 30 May 2018 |
| | | | | EP | 3326974 | A4 | 01 May 2019 |
| | | | | EP | 3326974 | B1 | 20 January 2021 |
| | | | | JP | 2018-520971 | A | 02 August 2018 |
| | | | | JP | 6611824 | B2 | 27 November 2019 |
| | | | | KR | 10-1711854 | B1 | 03 March 2017 |
| | | | | US | 10661227 | B2 | 26 May 2020 |
| | | | | US | 2018-0147531 | A1 | 31 May 2018 |
| | | | | WO | 2016-182337 | A1 | 17 November 2016 |
| CN | 211677202 | U | 16 October 2020 | None | | | |
| KR | 10-2186074 | B1 | 07 December 2020 | None | | | |
| KR | 10-2022-0086862 | A | 24 June 2022 | None | | | |
| JP | 2012-171827 | A | 10 September 2012 | None | | | |
| KR | 10-2019-0076677 | A | 02 July 2019 | CN | 111527046 | A | 11 August 2020 |
| | | | | KR | 10-2019-0076678 | A | 02 July 2019 |
| | | | | KR | 10-2019-0076753 | A | 02 July 2019 |
| | | | | KR | 10-2019-0078283 | A | 04 July 2019 |
| | | | | KR | 10-2043777 | B1 | 12 November 2019 |
| | | | | KR | 10-2044329 | B1 | 13 November 2019 |
| | | | | KR | 10-2044330 | B1 | 13 November 2019 |
| | | | | KR | 10-2044331 | B1 | 13 November 2019 |
| | | | | US | 11655150 | B2 | 23 May 2023 |
| | | | | US | 2020-0407225 | A1 | 31 December 2020 |
| | | | | WO | 2019-124941 | A1 | 27 June 2019 |

Form PCT/ISA/210 (patent family annex) (July 2022)

**REFERENCES CITED IN THE DESCRIPTION**

**Patent documents cited in the description**

- KR 1020220174510